# EUROPÄISCHE PATENTANMELDUNG

(11) **EP 2 034 586 A2**
(43) Veröffentlichungstag der Anmeldung: **11.03.2009**
(21) Anmeldenummer: 08104692.2
(22) Anmeldetag: 10.07.2008
(51) Int. Cl.: H02J 7/34, B60L 11/18

(54) **Energiespeichermodul für ein elektrisches Energieversorgungsnetz eines Kraftfahrzeugs**

(30) Priorität: 10.09.2007 DE 102007043071
(71) Anmelder: ROBERT BOSCH GMBH, 70442 Stuttgart (DE)
(72) Erfinder: Jocham, Reinhold, 72379 Hechingen (DE); Saur, Dietmar, 72810 Gomaringen (DE)

(57) **Zusammenfassung**

Die Erfindung betrifft ein Energiespeichermodul (100) mit mindestens einem elektrischen Energiespeicher (110) zur Speicherung elektrischer Energie für ein elektrisches Energieversorgungsnetz eines Kraftfahrzeugs, insbesondere für ein Traktionsnetz eines Kraftfahrzeugs mit Hybridantrieb.

Erfindungsgemäß ist mindestens eine weitere elektronische Komponente (120) des Energieversorgungsnetzes baulich integriert in das Energiespeichermodul (100).

## Beschreibung

### Stand der Technik

Die Erfindung betrifft ein Energiespeichermodul mit mindestens einem elektrischen Energiespeicher zur Speicherung elektrischer Energie für ein elektrisches Energieversorgungsnetz eines Kraftfahrzeugs, insbesondere für ein Traktionsnetz eines Kraftfahrzeugs mit Hybridantrieb.

Die vorliegende Erfindung betrifft ferner ein elektrisches Energieversorgungsnetz für ein Kraftfahrzeug.

Energiespeichermodule und elektrische Energieversorgungsnetze der vorstehend genannten Art sind bekannt und werden insbesondere bei Kraftfahrzeugen mit Hybridantrieb, die sowohl über eine Brennkraftmaschine als auch über eine elektrische Antriebseinheit verfügen, eingesetzt. Die Energiespeichermodule dienen vorwiegend zur Glättung der Spannung von Energieversorgungsnetzen und können gespeicherte Energie im Bedarfsfall entsprechend schnell an ein Energieversorgungsnetz abgeben.

Nachteilig an den bekannten Systemen ist der verhältnismäßig große Bedarf an freiem Einbauraum in dem Kraftfahrzeug. Insbesondere bei Kraftfahrzeugen mit Hybridantrieb ergeben sich Probleme, die verschiedenen zur Realisierung des Hybridantriebs erforderlichen Komponenten, darunter auch die Energiespeichermodule und mit ihnen zusammenwirkende Komponenten, in einen Motorraum des Kraftfahrzeugs zu integrieren.

### Offenbarung der Erfindung

Dementsprechend ist es Aufgabe der vorliegenden Erfindung, ein Energiespeichermodul und ein elektrisches Energieversorgungsnetz der eingangs genannten Art dahingehend zu verbessern, dass eine bessere Integration und damit ein geringerer Platzbedarf der gesamten Anordnung geben ist.

Diese Aufgabe wird bei dem Energiespeichermodul der eingangs genannten Art erfindungsgemäß dadurch gelöst, dass mindestens eine weitere elektronische Komponente des Energieversorgungsnetzes baulich integriert ist in das Energiespeichermodul. Die erfindungsgemäße Integration der mindestens einen weiteren elektronischen Komponente des Energieversorgungsnetzes trägt vorteilhaft dazu bei, den insgesamt erforderlichen Einbauraum zu reduzieren und verringert gleichzeitig einen Montageaufwand der Komponenten z.B. in einem Motorraum eines Kraftfahrzeugs, weil eine geringere Anzahl unterschiedlicher Einheiten zu verbauen ist.

Eine besonders vorteilhafte Variante des erfindungsgemäßen Energiespeichermoduls sieht vor, dass die weitere elektronische Komponente elektrisch mit dem Energiespeicher verbunden ist, wobei aufgrund der erfindungsgemäßen Integration nicht nur der erforderliche Einbauraum, sondern auch der zur elektrischen Verbindung der Komponenten erforderliche Aufwand reduziert ist.

Ganz besonders vorteilhaft schlägt eine weitere Variante der vorliegenden Erfindung vor, als weitere elektronische Komponente ein Funkentstörmodul vorzusehen. Die bauliche Integration des Funkentstörmoduls in das Energiespeichermodul ist besonders bevorzugt, weil ein enger funktionaler Zusammenhang zwischen den beiden Komponenten derart besteht, dass das Funkentstörmodul zur Vermeidung von Störabstrahlungen vorgesehen ist, die bei einer insbesondere hochfrequent getakteten Energieentnahme aus dem Energiespeichermodul auftreten können. Die bauliche Integration beider Komponenten hat den weiteren Vorteil, dass elektrische Verbindungsmittel wie z.B. Verbindungskabel zwischen den beiden Komponenten sehr kurz ausgebildet werden können beziehungsweise ganz entfallen, wodurch wiederum insbesondere die Abstrahlung der vorstehend genannten Störstrahlen verringert wird.

Einer anderen sehr vorteilhaften Erfindungsvariante zufolge kann als weitere elektronische Komponente auch ein elektronischer Leistungsschalter vorgesehen und baulich in das Energiespeichermodul integriert sein.

Besonders vorteilhaft ist es ferner möglich, als weitere elektronische Komponente Sensormittel zur Erfassung von Betriebsgrößen des Energieversorgungsnetzes und/oder des Energiespeichermoduls vorzusehen. Die erfindungsgemäßen Sensormittel können beispielsweise eine Temperatur des Energiespeichermoduls, elektrische Betriebsgrößen wie z.B. einen entnommenen Strom oder eine Klemmenspannung oder dergleichen erfassen und gegebenenfalls an eine Steuereinheit des Energieversorgungsnetzes beziehungsweise des Energiespeichermoduls oder eine weitere Komponente des Kraftfahrzeugs ausgeben.

Bei einer anderen besonders vorteilhaften Variante des erfindungsgemäßen Energiespeichermoduls ist mindestens eine Aufnahme zur Anordnung der weiteren elektronischen Komponente an ein Gehäuse des Energiespeichermoduls angeformt beziehungsweise einstückig mit dem Gehäuse des Energiespeichermoduls ausgebildet, so dass eine besonders effiziente Fertigung des erfindungsgemäßen Energiespeichermoduls und eine einfache Montage der weiteren elektronischen Komponente möglich ist.

Besonders vorteilhaft kann die Aufnahme erfindungsgemäß ferner so ausgebildet sein, dass einzelne Elemente der weiteren elektronischen Komponente einzeln in die Aufnahme einlegbar sind und/oder von dieser, vorzugsweise lösbar, gehalten werden, beispielsweise durch Rastverbindungen. Sofern die weitere elektronische Komponente beispielsweise als Funkentstörmodul ausgebildet ist, das unter anderem ein oder mehrere induktive Bauelemente sowie kapazitive Bauelemente aufweist, kann eine Ausbildung der erfindungsgemäßen Aufnahme beispielsweise verschiedene Vertiefungen umfassen, die formangepasst sind an die aufzunehmenden induktiven und kapazitiven Bauelemente und ein einfaches Einpassen der betreffenden Bauelemente in die Aufnahme ermöglichen. Ein leichter Austausch der einzelnen Bauelemente ist durch eine lösbare Verbindung mit der Aufnahme wie beispielsweise durch Rastoder Schnappverbindungen realisierbar.

Bei einer weiteren bevorzugten Erfindungsvariante sind Elemente zur elektrischen Verbindung zwischen Teilen der weiteren elektronischen Komponente und/oder des Energiespeichers selbst zumindest teilweise als Einlegteile und/oder spritzgegossene Schaltungsträger, MID (moulded interconnect device) ausgebildet. Das heißt, die einzelnen Elemente, bei denen es sich beispielsweise um stromleitende Verbindungsschienen oder dergleichen handeln kann, können vergleichbar zu den Bauelementen der weiteren elektronischen Komponente selbst ebenfalls in hierfür vorgesehene Ausnehmungen in dem Gehäuse des Energiespeichermoduls, insbesondere in entsprechende Aufnahmen, eingefügt werden.

Ganz besonders vorteilhaft weist das erfindungsgemäße Energiespeichermodul bei einer weiteren Variante mindestens eine Aufnahme für Ableitbleche mit thermischer und/oder elektrischer Ableitfunktion auf, so dass eine besonders einfache Montage der betreffenden Ableitbleche gegeben ist. Die Aufnahme derartiger Ableitbleche kann durch entsprechende Ausnehmungen in dem Gehäuse des erfindungsgemäßen Energiespeichermoduls ermöglicht werden.

Besonders vorteilhaft kann bei einer weiteren Variante des erfindungsgemäßen Energiespeichermoduls vorgesehen sein, dass mindestens ein Ableitblech zur elektrischen Verbindung zwischen Teilen der weiteren elektronischen Komponente und/oder des Energiespeichers vorgesehen ist. Das heißt, das erfindungsgemäß verhältnismäßig einfach montierbare Ableitblech kann vorteilhaft gleichzeitig zur elektrischen Verbindung von Komponenten des Energiespeichermoduls und der weiteren elektronischen Komponente wie beispielsweise des Funkentstörmoduls dienen. Beispielsweise ist es denkbar, dass eine gemeinsame Masseanschlussfläche durch ein derartiges erfindungsgemäßes Ableitblech realisiert ist, die in eine entsprechende Aufnahme in dem Gehäuse des Energiespeichermoduls einschiebbar ist, wobei die Aufnahme so angeordnet ist, dass das Masse-Ableitblech räumlich zwischen der weiteren elektronischen Komponente, wie beispielsweise dem Funkentstörmodul, und dem Energiespeicher des Energiespeichermoduls angeordnet ist.

Bei einer weiteren sehr vorteilhaften Variante des erfindungsgemäßen Energiespeichermoduls ist vorgesehen, dass der elektrische Energiespeicher Kondensatoren und/oder Akkumulatoren aufweist. Insbesondere ist auch eine Kombination von Kondensatoren und/oder Akkumulatoren in baulicher Einheit zusammen mit den erfindungsgemäß vorgesehenen weiteren elektronischen Komponenten denkbar, so dass beispielsweise zusätzlich zu dem Akkumulator als elektrischem Energiespeicher ein oder mehrere Kondensatoren oder entsprechende Kondensatormodule in ein Gehäuse des Akkumulators integriert sind, in das ferner erfindungsgemäß auch weitere elektronische Komponenten wie beispielsweise ein Funkentstörmodul integriert sind.

Bevorzugt umfasst der elektrische Energiespeicher als Doppelschichtkondensatoren ausgebildete Kondensatoren.

Als eine weitere Lösung der Aufgabe der vorliegenden Erfindung ist ein elektrisches Energieversorgungsnetz gemäß Patentanspruch 12 angegeben, das mindestens ein erfindungsgemäßes Energiespeichermodul aufweist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

### Kurze Beschreibung der Zeichnung

- Figur 1: zeigt ein vereinfachtes Blockschaltbild einer ersten Ausführungsform des erfindungsgemäßen Energiespeichermoduls,
- Figur 2a: zeigt eine vereinfachte perspektivische Ansicht einer weiteren Ausführungsform des erfindungsgemäßen Energiespeichermoduls, und
- Figur 2b: zeigt eine weitere perspektivische Ansicht des Energiespeichermoduls gemäß Figur 2a.

### Ausführungsformen der Erfindung

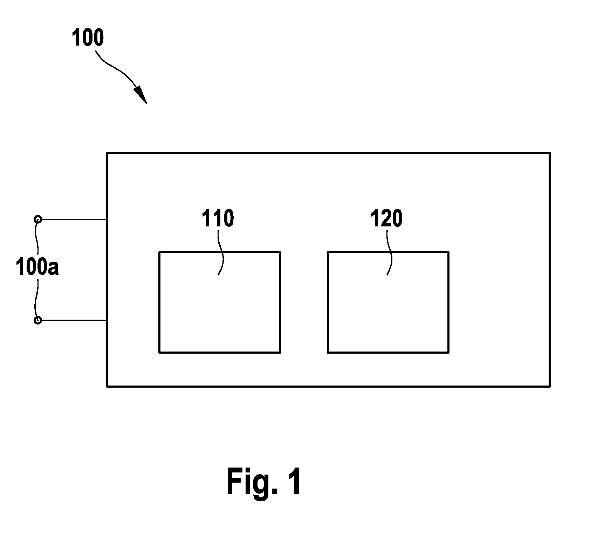

Figur 1 zeigt schematisch ein Blockschaltbild eines erfindungsgemäßen Energiespeichermoduls 100, wie es in elektrischen Energieversorgungsnetzen für Kraftfahrzeuge eingesetzt werden kann. Obwohl das Energiespeichermodul 100 bevorzugt in einem Traktionsnetz eines Kraftfahrzeugs mit Hybridantrieb eingesetzt wird, um z.B. zumindest einen Teil des elektrischen Energiebedarfs einer elektrischen Antriebseinheit des Hybridfahrzeugs abzudecken und insbesondere kurzzeitig erhöhte Energieaufnahmen abzupuffern, ist es auch denkbar, das erfindungsgemäße Energiespeichermodul 100 beispielsweise im Zusammenhang mit einem herkömmlichen Kraftfahrzeug-Bordnetz zu verwenden. Hierzu wird das Energiespeichermodul 100 beispielsweise mit seinen in Figur 1 schematisch angedeuteten Klemmen 100a an das nicht in Figur 1 abgebildete elektrische Energieversorgungsnetz beziehungsweise Traktionsnetz des betreffenden Kraftfahrzeugs angeschlossen.

Das Energiespeichermodul 100 weist einen elektrischen Energiespeicher 110 auf, der beispielsweise über Kondensatoren, insbesondere hochkapazitive Doppelschichtkondensatoren, als elektrische Energiespeichereinheiten verfügt. Alternativ oder ergänzend können auch Akkumulatoren in dem elektrischen Energiespeicher 110 vorgesehen sein oder weitere Komponenten, die die Speicherung und bevorzugt kurzzeitige Abgabe elektrischer Energie ermöglichen, z.B. vergleichbar zu Glättungskondensatoren.

Erfindungsgemäß ist mindestens eine weitere elektronische Komponente 120 des Energieversorgungsnetzes baulich integriert in das Energiespeichermodul 100.

Dadurch wird eine Reduktion des für den Einbau derartiger Systeme erforderlichen freien Einbauraums erzielt sowie insbesondere eine Vereinfachung einer gegebenenfalls erforderlichen elektrischen Verbindung zwischen der weiteren elektronischen Komponente 120 und dem elektrischen Energiespeicher 110 oder anderer Bestandteile des erfindungsgemäßen Energiespeichermoduls 100.

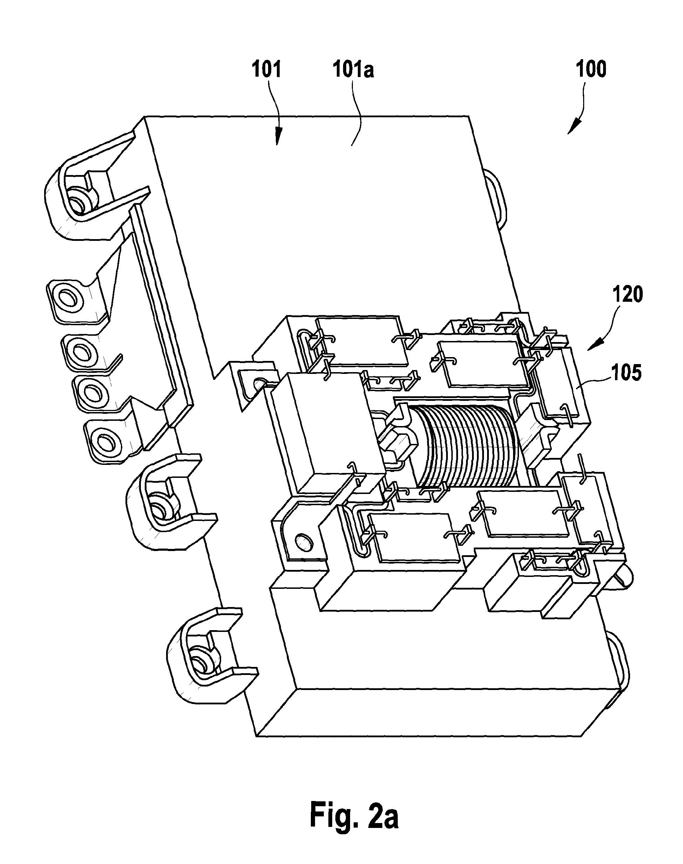

Figur 2a zeigt eine erste perspektivische Ansicht einer weiteren Ausführungsform des erfindungsgemäßen Energiespeichermoduls 100, das über ein Gehäuse 101 verfügt. Wie aus Figur 2a ersichtlich, sind an der Oberfläche 101a des Gehäuses 101 Aufnahmen 105 angeordnet, die zur Aufnahme von Komponenten der weiteren elektronischen Komponente 120 dienen. Bei der weiteren elektronischen Komponente 120 handelt es sich vorliegend um ein Funkentstörmodul, das eine Mehrzahl von induktiven und kapazitiven Bauelementen aufweist. Diese Bauelemente des Funkentstörmoduls 120 sind größtenteils in den bereits beschriebenen Aufnahmen 105 auf der Oberfläche 101a des Gehäuses 101 des erfindungsgemäßen Energiespeichermoduls 100 angeordnet.

Besonders vorteilhaft sind die Aufnahmen 105 einstückig mit dem Gehäuse 101 des Energiespeichermoduls 100 ausgebildet, wobei sich eine einfache und effiziente Fertigung des erfindungsgemäßen Energiespeichermoduls 100 ergibt.

Bei einer weiteren sehr vorteilhaften Variante der vorliegenden Erfindung kann vorgesehen sein, dass die Aufnahmen 105 so ausgebildet sind, dass die einzelnen Bauelemente des Funkentstörmoduls 120 lösbar in der Aufnahme 105 gehalten werden. Dies ist in dem Fachmann bekannter Weise beispielsweise durch Rast- und/oder Schnappverbindungen oder dergleichen zu erzielen.

Um eine sichere Anordnung der einzelnen Bauelemente des Funkentstörmoduls 120 zu gewährleisten, sind die Aufnahmen 105 des Energiespeichermoduls 100 bevorzugt formangepasst an die jeweiligen Bauelemente.

Zwischen den verschiedenen Bauelementen des Funkentstörmoduls 120 gegebenenfalls herzustellende elektrische Verbindungen können erfindungsgemäß vorteilhaft durch Verbindungsschienen realisiert werden, die elektrisch leitfähig sind und beispielsweise als Einlegteile ebenfalls in die Aufnahmen 105 beziehungsweise das Gehäuse 101 integriert werden können.

Es ist ebenfalls denkbar, elektrische Verbindungen zwischen den Komponenten unter Verwendung von spritzgegossenen Schaltungsträgern zu realisieren.

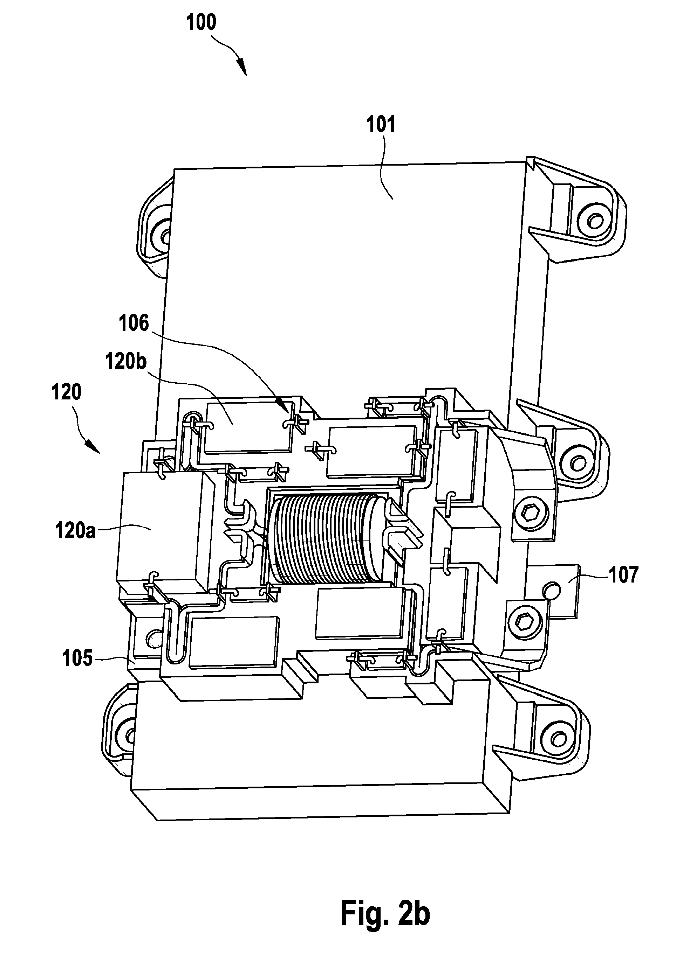

Figur 2b zeigt eine weitere perspektivische Ansicht des bereits unter Bezugnahme auf Figur 2a erläuterten Ausführungsbeispiels, in dem einzelne Bauelemente 120a, 120b des Funkentstörmoduls 120 näher bezeichnet sind. Ebenfalls aus Figur 2b ersichtlich sind die Elemente 106 zur elektrischen Verbindung zwischen Teilen des Funkentstörmoduls 120 und/oder des Energiespeichers 110, der bei den Abbildungen gemäß Figur 2a, 2b nicht bezeichnet ist, da er innerhalb des Gehäuses 101 des Energiespeichermoduls 100 angeordnet ist.

Das erfindungsgemäße Energiespeichermodul 100 beziehungsweise sein Gehäuse 101 weist mindestens eine Aufnahme für Ableitbleche 107 auf, die zur verbesserten Wärmeleitung und/oder elektrischen Kontaktierung der Komponenten des Energiespeichermoduls 100 darin vorgesehen sein können.

Neben dem Funkentstörmodul 120 können auch weitere elektronische Komponenten des Energieversorgungsnetzes baulich integriert sein in das Energiespeichermodul 100. Besonders bevorzugt können beispielsweise auch elektronische Leistungsschalter, die den Energiefluss zwischen dem Energiespeichermodul 100 beziehungsweise dessen elektrischem Energiespeicher 110 und einem Traktionsnetz steuern, in dem Energiespeichermodul 100 selbst beziehungsweise in dessen Gehäuse 101 integriert sein. Die erfindungsgemäße Anordnung von Sensormitteln in baulicher Einheit mit dem Energiespeichermodul 100 ist ebenfalls denkbar.

Die Sensormittel können beispielsweise zur Erfassung einer Betriebstemperatur, der elektrischen Betriebsgrößen des Energiespeichermoduls 100 oder weiterer interessierender Größen vorgesehen sein.

Eine Übertragung der von den Sensormitteln erfassten Größen kann entweder über das elektrische Energieversorgungsnetz beziehungsweise Traktionsnetz selber erfolgen oder auch im Wege einer drahtlosen Datenübertragung, beispielsweise unter Verwendung eines ZigBee-Sensornetzwerks oder dergleichen.

Insgesamt ermöglicht die erfindungsgemäße Integration des Funkentstörmoduls 120 sowie gegebenenfalls weiterer elektronischer Komponenten des Energieversorgungsnetzes in das Energiespeichermodul 100 das Einsparen von Bauraum und entsprechender Montage- und Herstellungskosten.

## Patentansprüche

1. Energiespeichermodul (100) mit mindestens einem elektrischen Energiespeicher (110) zur Speicherung elektrischer Energie für ein elektrisches Energieversorgungsnetz eines Kraftfahrzeugs, insbesondere für ein Traktionsnetz eines Kraftfahrzeugs mit Hybridantrieb, **dadurch gekennzeichnet, dass** mindestens eine weitere elektronische Komponente (120) des Energieversorgungsnetzes baulich integriert ist in das Energiespeichermodul (100).

2. Energiespeichermodul (100) nach Anspruch 1, **dadurch gekennzeichnet, dass** die weitere elektronische Komponente elektrisch mit dem Energiespeicher (110) verbunden ist.

3. Energiespeichermodul (100) nach einem der vorstehenden Ansprüche, **dadurch gekennzeichnet, dass** als weitere elektronische Komponente ein Funkentstörmodul (120) vorgesehen ist.

4. Energiespeichermodul (100) nach einem der vorstehenden Ansprüche, **dadurch gekennzeichnet, dass** als weitere elektronische Komponente (120) ein elektronischer Leistungsschalter vorgesehen ist.

5. Energiespeichermodul (100) nach einem der vorstehenden Ansprüche, **dadurch gekennzeichnet, dass** als weitere elektronische Komponente (120) Sensormittel zur Erfassung von Betriebsgrößen des Energieversorgungsnetzes und/oder des Energiespeichermoduls (100) vorgesehen sind.

6. Energiespeichermodul (100) nach einem der vorstehenden Ansprüche, **dadurch gekennzeichnet, dass** eine Aufnahme (105) zur Anordnung der weiteren elektronischen Komponente (120) angeformt ist an ein bzw. einstückig ausgebildet ist mit einem Gehäuse (101) des Energiespeichermoduls (100).

7. Energiespeichermodul (100) nach Anspruch 6, **dadurch gekennzeichnet, dass** die Aufnahme (105) so ausgebildet ist, dass einzelne Elemente (120a, 120b, ..) der weiteren elektronischen Komponente (120) einzeln in die Aufnahme (105) einlegbar sind und/oder von dieser, vorzugsweise lösbar, gehalten werden, beispielsweise durch Rastverbindungen.

8. Energiespeichermodul (100) nach einem der vorstehenden Ansprüche, **dadurch gekennzeichnet, dass** Elemente (106) zur elektrischen Verbindung zwischen Teilen der weiteren elektronischen Komponente (120) und/oder des Energiespeichers (110) zumindest teilweise als Einlegteile und/oder spritzgegossener Schaltungsträger, MID, moulded interconnect device, ausgebildet sind.

9. Energiespeichermodul (100) nach einem der vorstehenden Ansprüche, **dadurch gekennzeichnet, dass** das Energiespeichermodul (100) bzw. sein Gehäuse (101) mindestens eine Aufnahme für Ableitbleche (107) mit thermischer und/oder elektrischer Ableitfunktion aufweist.

10. Energiespeichermodul (100) nach Anspruch 9, **dadurch gekennzeichnet, dass** mindestens ein Ableitblech (107) zur elektrischen Verbindung zwischen Teilen der weiteren elektronischen Komponente und/oder des Energiespeichers (110) vorgesehen ist.

11. Energiespeichermodul (100) nach einem der vorstehenden Ansprüche, **dadurch gekennzeichnet, dass** der elektrische Energiespeicher (110) Kondensatoren und/oder Akkumulatoren aufweist.

12. Elektrisches Energieversorgungsnetz für ein Kraftfahrzeug, insbesondere Traktionsnetz eines Kraftfahrzeugs mit Hybridantrieb, **gekennzeichnet durch** mindestens ein Energiespeichermodul (100) nach einem der vorstehenden Ansprüche.
